# EUROPEAN PATENT APPLICATION

(11) **EP 0 591 702 A1**
(43) Date of publication of application: **13.04.1994**
(21) Application number: 93114566.8
(22) Date of filing: 10.09.1993
(51) Int. Cl.: G09G 5/14

(54) **User interface method and system**

(30) Priority: 25.09.1992 IT MI922213
(71) Applicant: International Business Machines Corporation, Armonk, N.Y. 10504 (US)
(72) Inventor: Messina, Massimo, I-00198 Roma (IT)
(74) Representative: Zerbi, Guido Maria

(57) **Abstract**

In an window-oriented data processing system, a method and apparatus for creating, storing and recalling for later reuse a user interface, comprised of a set of windows, each window having one or more object associated, each object being the source of data arranged in data fields.

## Description

This invention relates to a user interface method and system in an interactive workstation data processing system, and more particularly in a window-oriented environment.

Workstation applications have the requirement to provide their users with an easy-to-use mechanism for defining and tailoring application elements.
The evolution of the interfaces by which the user dialogs with the operating systems, caused the operations required to become more and more user friendly.
The requirement is to provide the user with an environment where he can invoke functions of the system without being skilled in the way the system operates.

It is known that in a common interactive workstation application, the elements controlled by the application may be represented as objects and the actions available against said elements may be programs embodied in the object themselves.
In presence of a large number of available functions it can be laborious and time consuming for a user to reach the information or the functions he needs, because of the need to navigate through the sequence of the required operations.
This problem may become dramatic when said sequences of operations need to be continuously repeated

It is therefore an object of the present invention to overcome the above drawbacks of the prior art.

According to the present invention we provide in an interactive workstation data processing environment, a method for creating and storing for later reuse a user interface, said user interface being composed by one or more windows, each window being associated to one or more objects, the objects being the source of data arranged in data fields, the method comprising the steps of:
- defining the user interface, the interface definition comprising the steps of: generating and displaying one or more windows; assigning to each window a lay-out definition, the lay-out definition comprising the position of the window on the screen, the visual characteriscs and the sizes of the window; associating to each window at least one object; associating to each object at least one related data field;
- storing the definition of the user interface for later reuse.

Further according to the present invention we provide an interactive workstation data processing system having a user interface, the user interface being composed by one or more windows, each window being associated to one or more objects, the objects being the source of data arranged in data fields, the system comprising:
- means for defining the user interface, said means for defining the user interface comprising: means for generating a set of window; display means for displaying the windows; means for associating to the windows at least one object; means for associating to the objects at least one data field;
- storage means for storing the definition of the user interface.

Such a method and system avoid the user constraint of exploring the consecutive linked operations of the application to reach the information he needs, and provides an easy-to-use application scenario comprised of several related objects and the associated information.

The foregoing and other objects, features, and advantages of the invention will be apparent from the following more particular description of the preferred embodiment of the invention, as illustrated in the accompanying drawings.

Fig. 1 is a schematic diagram of an interactive workstation data processing system embodying the invention.

Figg. 2 and 3 are schematic diagrams of the process of creating, storing and recalling the objacts and the associated information.

Fig. 4 is an example of the representation of the hierarchy between the objects.

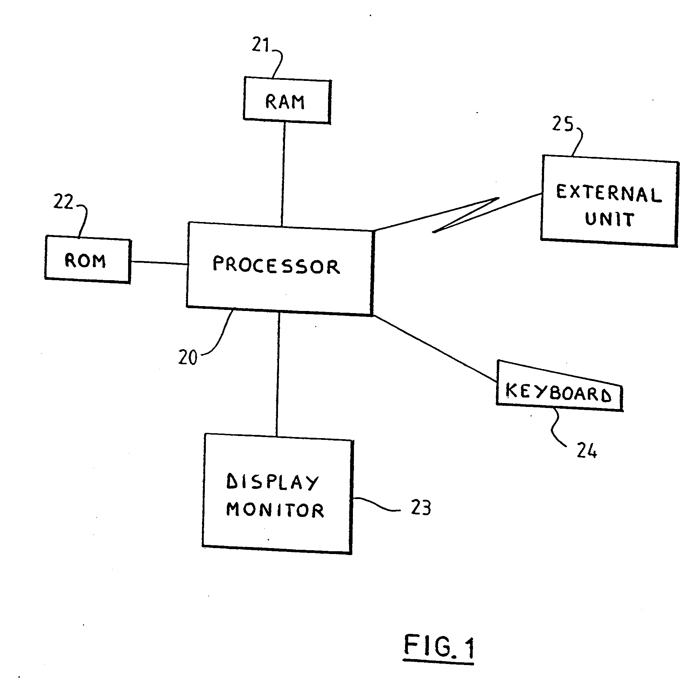

Figure 1 describes the data processing system on which the preferred embodiment of the present invention operates.
The system includes a processor (20), a random access memory (RAM) (21), a read only memory (ROM) (22), a display monitor (23), a keyboard (24) and a connection with external unit (25) such as external storage, a host computer or other data processing systems.

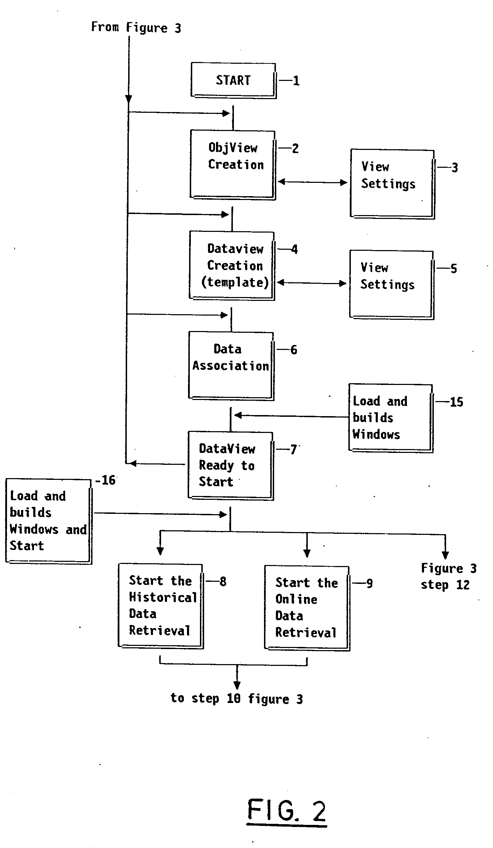

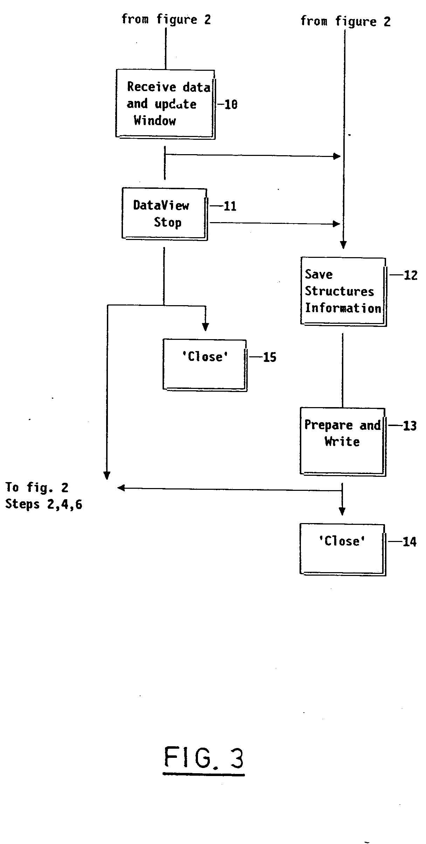

In figure 2 the process for creating the user interface is shown. According to the preferred embodiment the step 1 requests the first level of the hierarchy of the objects after completion of the initialization fase, representing those objects in a tree in RAM memory (11). This means that the being created windows (ObjView) will have the first level of the ObjView hierarchy always available.
The ObjView is a window in which the objects information received from external unit (25) or from RAM (11) or from a virtual memory when available in the data processing system.

The step 2 in figure 2 shows the creation of the ObjView. An ObjView can be also described as a container or a visual component whose specific purpose is to hold objects. The objects displayed in the ObjView belong to different classes and types. In the embodiment described objects are network control units and related programs, Network Control Programs (NCP), transmission lines and Physical Units (PU).

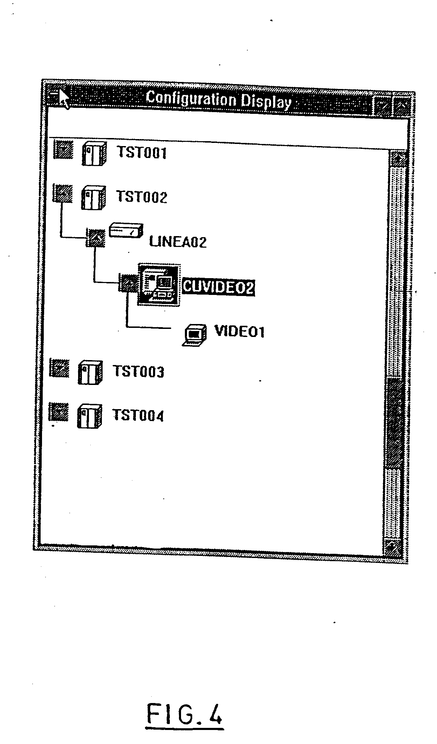

A container can display objects in various formats and views; the switching between one type and another is done through the use of a pop-up menu driven by mouse operations.
The hierarchy of the objects is represented by the relation between the container objects and the container itself. To better explain this concept, all the NCPs controlled by the external unit (25) are included in the NCP container object; all the transmission lines connected to an NCP are shown as children of the NCP itself, as well as all the PUs attached under one line are shown as children of that line (see figure 4, where TST001, TST002, TST003 and TST004 are network control units, LINEA02 is a line, CUVIDE02 is a Phisical Unit and VIDE01 is a video terminal).
When the user creates a new ObjView through selection of the related items of related menus, the presence of the object is checked in the tree in memory and, if it is not found, the external unit (25) is requested for the missing objects information. This way of operating allows the downloading of objects only when the user refers to them, with better performance and better transmission media utilization, e.g. in managing very large networks as in the described embodiment. Further the memory utilization of the workstation is related only to the effective utilization of the objects.

Step 3 enables the user to select or modify the visual characteristics of the ObjView, such as colours, titles, fonts and sizes.

Step 4 shows the creation of a DataView. A DataView, in the described embodiment, displays both historical and on-line network performance data, obtained from the external unit.
DataView may display the network performance data in two modes: graphical and textual.
In graphical mode the user has the ability of displaying the network performance data through multiple graphics on the screen with the option of different scaling, different positions on the screen, different types of charts (pie, column, area, 3D Bar, Line). Each graphical data-view may display performance data representing two combinations of pair object(resource) / data-field(counter). A DataView may refer to one object and one or more data defined for that object (Oneres-mode), or to one data-field and one or more object for which that field is defined (Onecounter-mode). The association of one of the two modes is performed by the system and it is based on user selection. A DataView with Onecounter mode may be later changed to Oneres mode or viceversa. On a graph times are always on the X axis.
In textual mode the performance data are displayed in a textual format. The two modes Oneres and Onecounter have the same meaning as in graphical mode. The resources in Onecounter mode or the counters in Oneres mode are shown as headers of the text view columns. Intervals and their relative values are always the rows.

Selecting items in the proper menu the user can modify the parameters of the DataView, such as fonts, colours, sizes, titles, legends, footnotes (step 5).

Step 6 defines the resource/counter pair used to drive the data retrieval required by the DataView. The user can insert a resource in the resource list by manually add it to the list or by chosing it within a proposed set of possible resources. Once a resource is in the resource list, all the counters applicable to that resource are shown in the counter list. The user must select at least one counter. If more than one counter are selected the Oneres-mode is assigned to the DataView and no more resource selections are allowed. If only one counter has been selected the Onecounter-mode is assigned to the DataView and the user can select other resources of the same type (with the same counter defined) of the first resource selected.

The step 7 will associate a graphical or textual representation of the selected counters for the selected resource (Oneres-mode) or the representation of the selected single counter for the selected resources (Onecounter-mode) accordingly to the formerly determined mode.

Steps 8 and 9 estabilish and build the commands needed to retrieve the required data which may be historycal(8) or on-line(9). Step 10 reported in figure 3 receives data and arrange them in the DataView according to the graphical (or textual) representation. In the case of on-line data the DtaView may be continuously updated at fixed time intervals or at any time new data are available, so that the user has always updated information available. Step 10 continues until the user decides to stop it (step 11). At this point the user can decide to finish the work session (step 14) or to repeat the process from one of the three steps 2, 4 or 6 reported in figure 2

Step 12 enables the user to retrieve and store structure information required to rebuild for a later use all the DataViews and ObjViews currently used. The information saved includes ObjViews and DataViews layout, resource/counter pairs and resource definition.

Step 13 arranges the structure information in script form and phisically writes it into a file.

Step 15 enables the user to load the previously saved script file to rebuild the ObjViews and DataViews accordingly to the saved information without requesting the data retrieval. The process continues as described before from the step 7.

Step 16 performs the same as the step 15 including the request for the data retrieval. The process continues as described before from the step 10.

The present invention has been described for a network performance monitoring system, but it could equally well be practiced in all those applications which operates with an object manipulation approach.

## Claims

1. In an interactive workstation data processing environment, a method for creating and storing for later reuse a user interface, said user interface being composed by one or more windows, each window being associated to one or more objects, the objects being the source of data arranged in data fields, the method comprising the steps of:
- defining the user interface, the interface definition comprising the steps of:
. generating and displaying one or more windows;
. assigning to each window a lay-out definition, the lay-out definition comprising the position of the window on the screen, the visual characteriscs and the sizes of the window;
. associating to each window at least one object;
. associating to each object at least one related data field;
- storing the definition of the user interface for later reuse.

2. The method of claim 1 wherein said windows can be of two types, a first window type managing objects hierarchically organized, a second window type showing data relating to objects representable by the windows of the first type, the step of associating to each window at least one object being referred to windows of the second type.

3. The method of claim 1 or 2 wherein the definition of the user interface is stored in a script file.

4. The method of claim 1, 2 or 3 where the data fields contain historical data.

5. The method of claim 1, 2 or 3 where the data fields contain on-line data.

6. The method of claim 5 where the on-line data are updated at fixed time intervals.

7. The method of claim 5 where the on-line data are updated at any time new data are available.

8. The method of claim 1, 2, 3, 4, 5, 6, or 7 where the data contained in the data fields are received by an external unit.

9. An interactive workstation data processing system having a user interface, the user interface being composed by a one or more windows, each window being associated to one or more objects, the objects being the source of data arranged in data fields, the system comprising:
- means for defining the user interface, said means for defining the user interface comprising:
. means for generating a set of window;
. display means for displaying the windows;
. means for associating to the windows at least one object;
. means for associating to the objects at least one data field;
- storage means for storing the definition of the user interface.

10. The system of claim 11 further including:
- means for retrieving the stored user interface definition;
- display means for displaying the user interface.

11. The system of claim 12 further including:
- means for modifying the user interface definition;
- means for storing the modified user interface definition.
